# EUROPEAN PATENT SPECIFICATION

(11) **EP 2 149 481 B1**
(45) Date of publication and mention of the grant of the patent: **12.09.2012**
(21) Application number: 09008381.7
(22) Date of filing: 26.06.2009
(51) Int. Cl.: B60R 22/46

(54) **Pretensioner, seatbelt retractor having pretensioner, and seatbelt device with seatbelt retractor**
Vorstraffer, Sitzgurtaufroller mit Vorstraffer und Sitzgurtvorrichtung mit Sitzgurtaufroller
Prétendeur, rétracteur de ceinture de sécurité doté du prétendeur, et dispositif de ceinture de sécurité doté du rétracteur de ceinture de sécurité

(30) Priority: 01.08.2008 JP 2008199753
(43) Date of publication of application: 03.02.2010
(73) Proprietor: Takata Corporation, Tokyo 106-8510 (JP)
(72) Inventor: Tomita, Hiroshi, Tokyo 106-8510 (JP)
(74) Representative: Banzer, Hans-Jörg

(56) References cited:
- WO-A-2005/080150
- DE-A1- 10 331 516
- DE-A1-102006 047 669
- DE-B3- 10 229 571
- DE-U1-202006 004 748

## Description

### Technical Field

The present invention relates to the technical field of a pretensioner provided for a seatbelt retractor for retracting a seatbelt using plural balls, a seatbelt retractor, and a seatbelt device for a vehicle.

### Background Art

Various types of seatbelt retractors each equipped with a pretensioner have been developed for a seatbelt device installed in a vehicle such as an automobile. The pretensioner is structured to allow reaction gas generated by a gas generator at the early stage in an emergency which applies higher deceleration than the one in the normal state to the vehicle involved with the collision to rotate a spool of the seatbelt retractor in the seatbelt retracting direction so as to retract a seatbelt with the spool. This makes it possible to take up the loosening of the seatbelt immediately, and to apply the tension force to the seatbelt for enhancing the force to restrain an occupant.

The pretensioner structured to store plural force transmission members each formed as a ball inside the pipe, which move therethrough under the pressure of the reaction gas generated in the emergency to press plural pressure receiving portions of a ring gear for rotating the spool in the seatbelt retracting direction has been well known as an example of the generally employed pretensioner (for example, see Japanese Unexamined Patent Application Publication No. 2001-233172 and Japanese Unexamined Patent Application Publication No. 2005-306111).

The pretensioner structured to store plural force transmission members formed as balls in the pipe, which move therethrough under the pressure of the reaction gas in the emergency to press one pressure receiving portion of the ring gear for rotating the spool in the seatbelt retracting direction is also well known (for example, see UK Patent Application GB 2323016A).

DE 102 29 571 B3 discloses a pretensioner according to the preamble of claim 1.

### Disclosure of the Invention

### Problems to be Solved by the Invention

In the pretensioner disclosed in Japanese Unexamined Patent Application Publication No. 2001-233172 and Japanese Unexamined Patent Application Publication No. 2005-306111, the ball having the rotating driving force lost at the end of a rotating driving operation of the ring gear is released from a notch portion of the pipe to move away from the ring gear so as to be stored in a ball storage chamber specially formed in the pretensioner. The ball storage chamber may increase the pretensioner size, and accordingly, further increase the seatbelt retractor size.

As the balls are stored in the ball storage chamber, the number of the balls is relatively large. The length of the pipe as the expensive component is increased. As a result, cost for the generally employed pretensioner becomes high. Besides, as the pipe has to be elongated to a certain length, the gas generator is inevitably disposed below the seatbelt retractor, which makes the work for assembling the gas generator complicated. If the gas generator is intended to be forcedly disposed above the seatbelt retractor, the piping becomes difficult, thus increasing the seatbelt retractor size.

Meanwhile, in the pretensioner disclosed in Patent Document 3, plural balls move along a movement path formed around the outer circumference of the ring gear while pressing a single pressure receiving portion. Those balls stop in the movement path as the ring gear stops rotating. The structure requires no specific ball storage chamber.

The combination of the pretensioner disclosed in Japanese Unexamined Patent Application Publication No. 2001-233172 and Japanese Unexamined Patent Application Publication No. 2005-306111 with the pretensioner disclosed in UK Patent Application GB 2323016A may be considered for eliminating the specific ball storage chamber.

In the pretensioner disclosed in UK Patent Application GB 2323016A, the ring gear has only one pressure receiving portion to which the plural balls apply pressing force. The pressing force of the plural balls cannot be transmitted to the ring gear effectively. The aforementioned structure fails to effectively retract the seatbelt while the pretensioner is operated. As the ring gear has external teeth with which a pinion is meshed, the rotating amount of the ring gear while pretension is operated cannot be set to a large value. As the ring gear is meshed with the pinion via the external teeth, the plural pressure receiving portions cannot be formed on the outer circumference of the ring gear. It is therefore difficult to effectively combine the pretensioner disclosed in UK Patent Application GB 2323016A with the pretensioner disclosed in Japanese Unexamined Patent Application Publication No. 2001-233172 and Japanese Unexamined Patent Application Publication No. 2005-306111.

Accordingly, the object of the present invention is to provide a pretensioner which improves the assembly work efficiency while effectively transmitting a pressing force of plural force transmission members to a ring gear so as to be formed as a compact structure at low costs, a seatbelt retractor provided with the pretensioner, and a seatbelt device provided with the seatbelt retractor.

### Means for Solving the Problems

According to the invention, this object is achieved by a pretensioner defined in claim 1, a seatbelt retractor as defined in claim 8, or a seatbelt device as defined in claim 9. The dependent claims define preferred and advantageous embodiments of the invention.

The pretensioner according to the present invention includes a pipe, plural force transmission members movably disposed in the pipe for transmitting a force for rotating a spool in a seatbelt retracting direction, a gas generator which generates gas in an emergency, a ring gear disposed at least rotatably, having plural internal teeth on an inner circumference and plural pressure receiving portions on an outer circumference, and a pinion disposed on a spool side member, having external teeth meshed with the internal teeth for rotating the spool, in which the force transmission member presses the pressure receiving portion of the ring gear to rotate the spool in the seatbelt retracting direction at a force transmission portion formed in the pipe in the emergency. The prestensioner further includes a movement path formed to have a circular shape concentric with a rotating center of the pinion, through which the force transmission member is movable. The force transmission member is allowed to be located in the movement path at the end of an operation.

The pretensioner according to the present invention may include a force transmission member stopper on which a first one of the plural force transmission members abuts to stop movement of the force transmission members.

In the pretensioner according to the present invention, the force transmission member stopper may be a component of the pretensioner.

The component of the pretensioner according to the present invention may be formed as the pipe around the force transmission portion.

The pretensioner may further comprise a case. The component of the pretensioner according to the present invention may be formed as a protrusion of the case.

In the pretensioner according to an embodiment of the present invention, the spool side member and the pinion are integrally formed of a single member.

A seatbelt retractor according to the present invention includes at least a seatbelt, a spool for retracting the seatbelt, and a pretensioner for rotating the spool in a seatbelt retracting direction in an emergency, and wherein the pretensioner according to the present invention is employed.

A seatbelt device according to the present invention includes at least a seatbelt retractor for retracting the seatbelt, a tongue slidably supported with a seatbelt, and a buckle attached to a vehicle body, with which the tongue is detachably engaged, and wherein the seatbelt retractor according to the present invention is employed.

### Advantages

In the above-structured pretensioner and the seatbelt retractor, the external teeth of the pinion formed on the spool side member are meshed with the internal teeth of the ring gear, and the force transmission members which sequentially move inside the pipe press the plural pressure receiving portions of the ring gear so as to rotate the ring gear. The spool is then rotated to retract the seatbelt. The force transmission member having the force for rotating the ring gear lost is stored in the circular movement path concentric with the pinion. Unlike the generally employed pretensioner, the chamber for storing the force transmission members does not have to be formed. This makes it possible to efficiently use the force of the plural force transmission members to rotate the ring gear while forming the pretensioner into a compact structure.

A first force transmission member abuts on the force transmission member stopper which may be formed of a component of the pretensioner, thus stopping the plural force transmission members effectively. In such a case, the force transmission member stopper may be formed of a component of the pretensioner to eliminate the need of a specific force transmission member stopper, thus reducing the cost.

The force transmission member stopper may be disposed around the force transmission portion of the pipe, which allows substantially one rotation of the ring gear. This makes it possible to increase the seatbelt retracting amount of the spool. In the aforementioned case, the gear ratio between the internal teeth of the ring gear and the external teeth of the pinion is set as needed to efficiently retract the seatbelt by substantially one rotation of the ring gear.

As the ring gear is allowed to make substantially one rotation, the number of the force transmission members may be reduced. This makes it possible to efficiently reduce the length of the pipe as relatively expensive material, thus effectively reducing the cost.

According to a preferred embodiment of the invention, the pipe is shortened so as to be piped to have the leading end located at the lowermost position. The pipe is linearly extended upward from the leading end, and bent at a substantially right angle at the upper end of the frame base to linearly extend toward the vehicle exterior side in a substantially horizontal direction. It is further bent at a substantially right angle at the end of the base at the vehicle exterior side so as to extend along the longitudinal direction of the vehicle. It is further bent at a substantially right angle at the end of the base along the longitudinal direction of the vehicle so as to extend slightly upward with respect to the horizontal direction toward the vehicle interior side. This makes it possible to direct the open end of a pressure vessel and a gas generator slightly upward at the vehicle interior side. The aforementioned piping further simplifies the insertion of the force transmission members into the pipe and the work for assembling the gas generator with the pressure vessel. The piping allows the seatbelt retractor with the pretensioner to have the compact structure further effectively.

The spool side member and the pinion may be integrally formed of a single member. In such a case, the pinion may further be made compact by forging. This makes it possible to increase the gear ratio between the ring gear and the pinion accordingly. Even if the number of the force transmission members is reduced, the rotating amount of the spool performed by the pretensioner may be increased. As a result, the seatbelt retracting amount may be effectively increased while reducing the pipe length.

The seatbelt device with the seatbelt retractor according to the present invention allows the seatbelt retractor to be compact. The space of the vehicle for accommodating the seatbelt retractor may be reduced. This makes it possible to improve the degree of freedom for installing the seatbelt retractor in the vehicle body. The seatbelt retractor may be installed in the vehicle body flexibly, improving convenience of a seatbelt device.

### Brief Description of the Drawings

Fig. 1 schematically shows a seatbelt device having a seatbelt retractor as an example according to the present invention.
Fig. 2 shows the seatbelt retractor as an example according to the present invention, wherein (a) is a view seen from outside the vehicle, (b) is a left side view, (c) is a right side view, and (d) is a top view.
Fig. 3 is a left side view of the seatbelt retractor shown in Fig. 2 having the pretensioner cover removed.
Fig. 4(a) is a partially cross section taken along line IVA-IVA shown in Fig. 3, (b) is a partially cross section of the modified example in the same way as in (a), and (c) is a partially cross section of another modified example in the same way as in (a).
Fig. 5 shows the pretensioner cover, wherein (a) is a top view, (b) is a front view, and (c) is a bottom view.
Fig. 6 shows the operation of the pretensioner, wherein (a) is a view showing the state in operation, (b) is a view showing the state immediately after starting the operation, and (c) is a view showing the state at the end of the operation.

### Best Mode for Carrying Out the Invention

The best mode for carrying out the present invention will be described referring to the drawings.

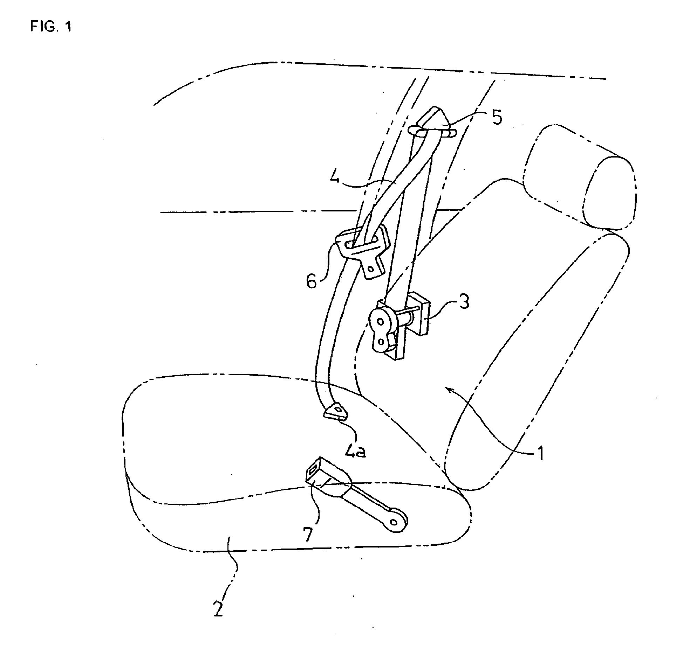

Fig. 1 schematically shows a seatbelt device provided with a seatbelt retractor according to an embodiment of the present invention.

Referring to Fig. 1, a seatbelt device 1 of the example is basically the same as the known three-point seatbelt device. The drawing shows the seatbelt device 1, a vehicle seat 2, a seatbelt retractor 3 disposed around the vehicle seat 2, a seatbelt 4 which can be retracted and withdrawn by the seatbelt retractor 3, having a belt anchor 4a at the leading end fixed to the floor of the vehicle body or the vehicle seat 2, a guide anchor 5 which guides the seatbelt 4 withdrawn from the seatbelt retractor 3 toward the occupant's shoulder, a tongue 6 slidably supported at the seat belt 4 guided by the guide anchor 5, and a buckle 7 fixed to the floor of the vehicle or the vehicle seat, into which the tongue 6 is inserted so as to be engaged therewith or disengaged therefrom.

The fastening and unfastening operations of the seatbelt 4 of the seatbelt device 1 are the same as those in the generally employed seatbelt device.

The seatbelt retractor 3 of the example may be a known emergency lock type belt retractor (ELR) or a known automatic lock type seatbelt retractor (ALR), which is provided with the pretensioner. Likewise the known pretensioner, it is activated upon application of a deceleration considerably higher than the one during the normal running to the vehicle involved in a collision for rotating the spool of the seatbelt retractor 3 in the seatbelt retracting direction. The seatbelt 4 is retracted by a certain amount for enhancing the force for restraining the occupant.

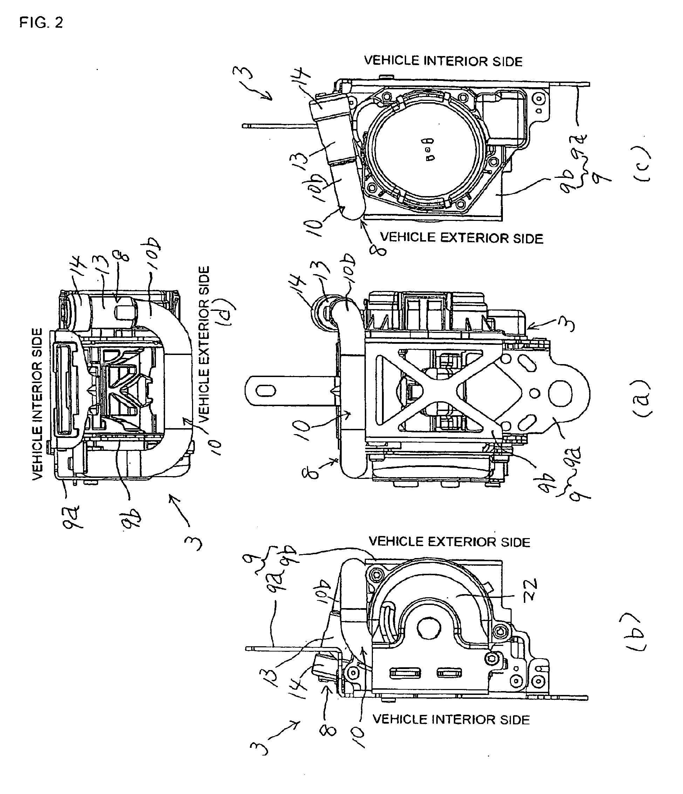

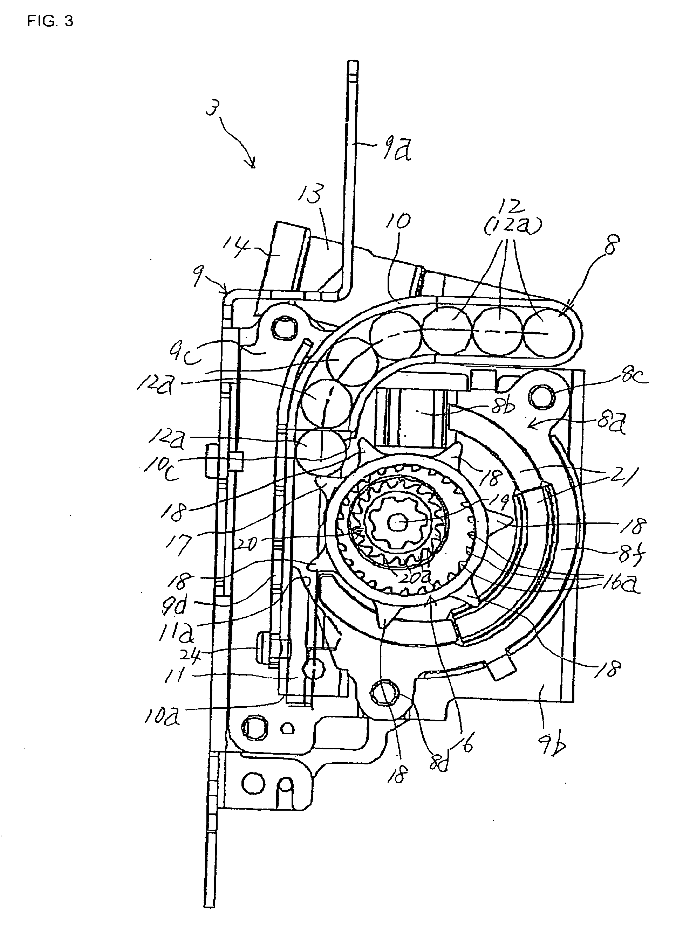

Figs. 2(a) to 2(d), and 3 show the seatbelt retractor provided with the pretensioner according to the example.

Referring to Figs. 2(a) to 2(d), a pretensioner 8 of the example is supported at a frame 9 of the seatbelt retractor 3. The frame 9 is formed of a stay 9a disposed at the vehicle interior side and a U-like shaped base portion 9b disposed at the vehicle exterior side upon installation of the seatbelt retractor 3 in the vehicle body. The stay 9a is detachably attached to the vehicle body, and the base portion 9b is detachably attached to the stay 9a. Components of the seatbelt retractor 3 such as the spool and the lock mechanism are attached to the base portion 9b. As the frame 9 is formed of the stay 9a and the base portion 9b which are separated, the stay 9a may be commonly used for the seatbelt retractor 3 of arbitrary type. The base portion may only be changed in accordance with the type of the seatbelt retractor 3. This makes it possible to flexibly install the seatbelt retractor 3 of the type in accordance with the vehicle model.

Referring to Fig. 3, the pretensioner 8 includes a pipe 10 having a leading end 10a closed with a sealing plug 11. The leading end 10a of the pipe 10 and the sealing plug 11 are fixed to a pipe attachment portion 9d formed on a side wall 9c of the base portion 9b with a fastener 24 such as the bolt.

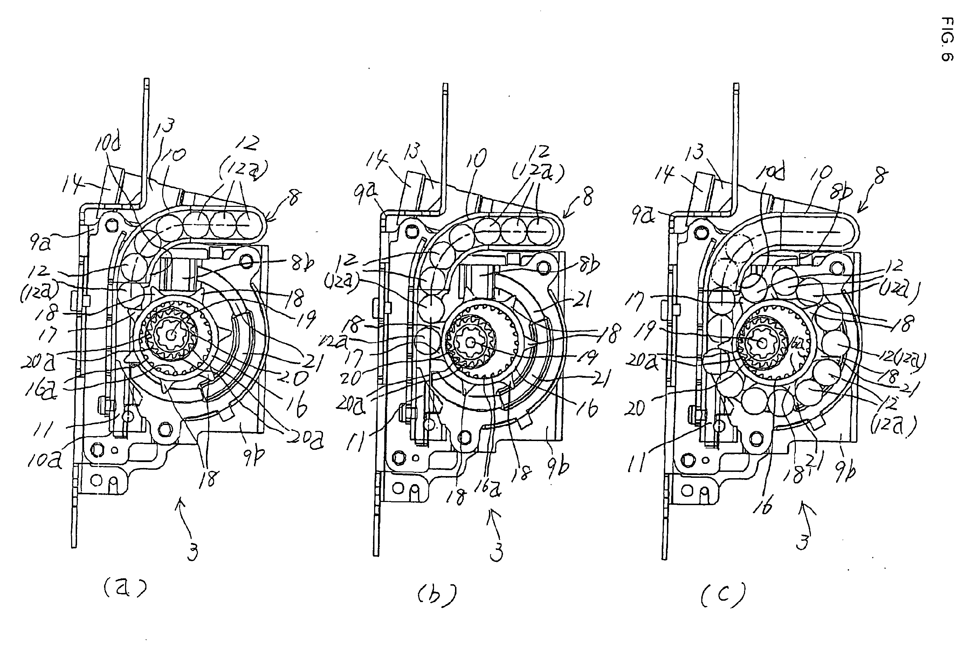

Plural force transmission members 12 which include plural metal balls 12a each formed of iron or aluminum, and a piston (not shown) for pressing the balls 12a under the gas pressure are disposed inside the pipe 10 so as to be movable in contact with each other. The number of the balls 12a of the pretensioner 8 in the example is smaller than that of the generally employed pretensioner (for example, the number of the balls of the pretensioner in the example is set to 13 as shown in Fig. 6(c) compared with 16 balls of the generally employed pretensioner). The pipe-like pressure vessel 13 is connected to a proximal end 10b of the pipe 10. The pressure vessel 13 has a gas generator 14.

The pretensioner 8 includes a case 8a attached to the side wall 9c. A ring gear 16 is disposed inside the case 8a so as to be rotatable and movable rightward as shown in Fig. 3. The ring gear 16 includes plural internal teeth 16a formed on an inner circumferential surface, and has a portion which is allowed to be inserted into the pipe 10 from a notch portion 10c at the leading end thereof.

The ring gear 16 is provided with a lever 17 (corresponding to the pressure receiving portion in the present invention) on which a first ball 12a abuts in the normal state (pretensioner 8 is inactive), and plural (6 in the drawing) levers 18 (corresponding to the pressure receiving portion in the present invention) which protrude on the outer circumferential surface. In this case, the circumferential interval between the first lever 17 and the adjacent lever 18 is set so as to partially accommodate the single ball 12a. The plural levers 18 are arranged such that the circumferential interval therebetween is set to partially accommodate two adjacent balls 12a in contact with each other.

A pinion 20 is rotatably and integrally attached to a rotary shaft 19 (corresponding to the spool side member in the present invention) of the locking base for the seatbelt retractor 3 (The pinion 20 may be rotatably and integrally attached to the not shown rotary shaft of the spool). The locking base is provided for the known ELR and ALR, which rotates integrally with the spool of the seatbelt retractor 3 for retracting the seatbelt 4 in the normal state. In an emergency where the high deceleration is applied to the vehicle involved in the collision, the rotating operation is locked to activate the lock mechanism to prevent the spool from rotating in the seatbelt retracting direction. The ELR provided with the pretensioner which uses plural balls and the locking base is disclosed in Japanese Unexamined Patent Application Publication No. 2001-233172 as described above. The operation of the locking base may be understood by referring to Japanese Unexamined Patent Application Publication No. 2001-233172, and the detailed description thereof, thus will be omitted.

The pinion 20 includes plural external teeth 20a which may be meshed with the internal teeth 16a of the ring gear 16. In this case, the diameter of the addendum circle of the pinion 20 of the pretensioner 8 in the example is smaller than the generally employed pretensioner (for example, the addendum diameter of the pinion of the generally employed pretensioner is φ24.6 mm compared with the addendum diameter of the pinion 20 of the pretensioner 8 according to the example set to φ19 mm). During the operation of the pretensioner 8, the balls 12a apply rotating drive force of the ring gear 16 to the levers 17 and 18 which are entering into the pipe 10 from the notch portion 10c while applying the direct moving force to the ring gear 16 toward the pinion 20. The notch portion 10c of the pipe 10 constitutes the force transmission portion which allows the force transmission members 12 as the balls 12a to transmit the rotating drive force and the direct moving force to the ring gear 16.

In case of piping of the pipe 10 in the pretensioner 8 of the example, the leading end 10a is located at the lowermost position when the pretensioner 8 is installed in the vehicle body. The pipe linearly extends from the leading end 10a upward such that the force transmission portion of the notch portion 10c is in a substantially horizontal direction with respect to the rotating center point of the pinion 20 (that is, spool). Each of the balls 12a transmits the force to the ring gear 16 in the seatbelt retracting direction tangentially with respect to the ring gear 16. As a result, the balls 12a are capable of transmitting the force to the ring gear 16 most efficiently.

The pipe 10 is bent at a substantially right angle at the portion around the upper end of the base portion 9b of the frame 9 to linearly extend toward the vehicle exterior side in a substantially horizontal direction. It is further bent at a substantially right angle at a portion around the end opposite the stay 9a of the base portion 9b to linearly extend in a substantially horizontal direction along the longitudinal direction of the vehicle. It is bent at a substantially right angle around the portion at the end of the base portion 9b along the longitudinal direction of the vehicle to linearly extend toward the vehicle interior side while being tilted slightly upward with respect to the horizontal direction. Accordingly, the pressure vessel 13 and the gas generator 14 are directed slightly upward above the base portion 9b toward the vehicle interior side.

The case 8a includes a guide groove 21 for guiding the balls 12a. The guide groove 21 is formed to have a circular shape concentric with the center of the ring gear 16 which has moved rightward as shown in Fig. 3 to have the internal teeth 16a meshed with the external teeth 20a of the pinion 20. An end of the sealing plug 11 inside the pipe at a joint portion between the guide groove 21 and the pipe 10 constitutes a circular guide surface 11a for smoothly guiding the ball 12a from the pipe 10 to the guide groove 21. In this case, the diameter of the arc on the guide surface 11a is substantially the same as the diameter of the outer diameter side of the guide groove 21.

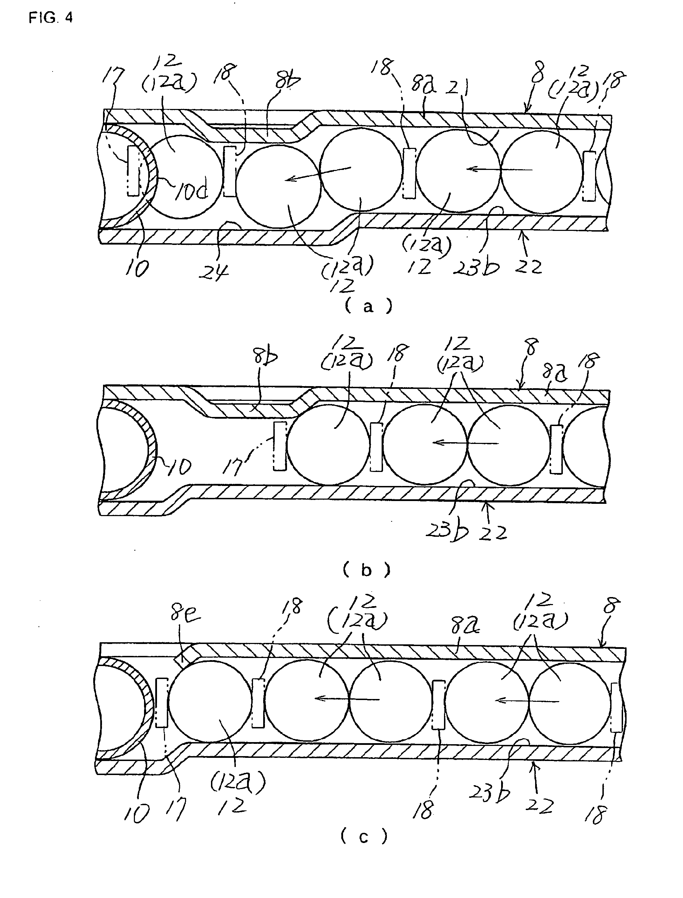

Referring to Fig. 4(a), the case 8a includes a protrusion 8b with the trapezoidal cross section at the terminal end (upper end shown in Fig. 3) of the guide groove 21.

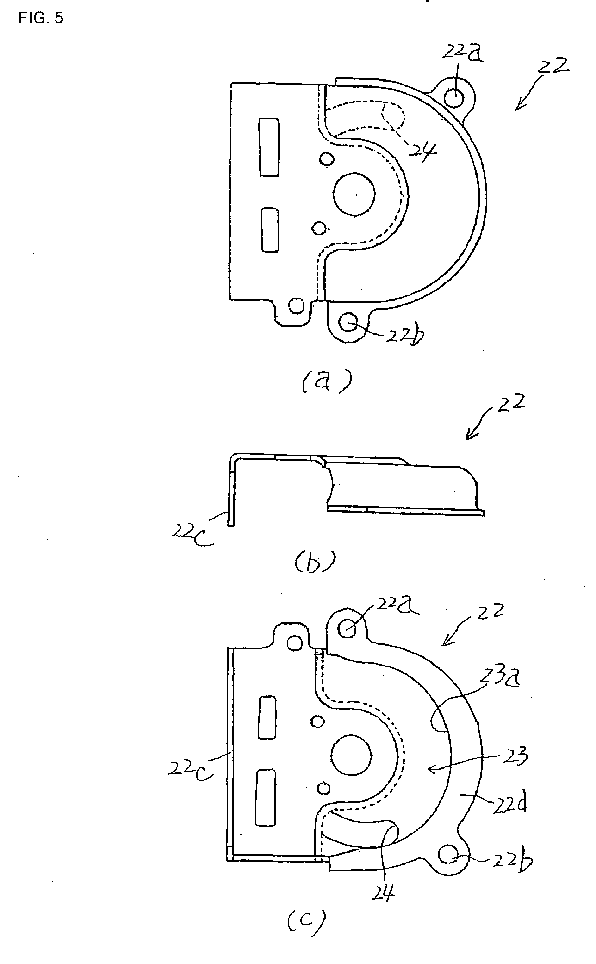

The case 8a is partially covered with a cover. Referring to Figs. 5(a) to 5(c), the cover 22 includes attachment portions 22a, 22b attached to two cover attachments 8c, 8d of the case 8a, and an engagement portion 22c to be engaged with a pipe attachment portion 9d of the side wall 9c. In a state where a joining surface 22d shown in Fig. 5(c) is joined with a joining surface 8f (shown in Fig. 3) of the case 8a, and the engagement portion 22c is engaged with the pipe attachment portion 9d, the bolts are inserted into the bolt insertion holes of the attachment portions 22a, 22b threaded with the internal threads of the cover attachments 8c, 8d such that the cover 22 is attached to the case 8a. In the state where the cover 22 is attached to the case 8a, the movement path through which the balls 12a move is formed between the case 8a and the cover 22. The circular movement path is formed into the arc concentric with the pinion 20.

Referring to Fig. 5(c), the cover 22 has a relatively large circular recess portion 23 along which each ball 12a is movable. The recess portion 23 is substantially semicircular having an inner peripheral wall surface 23a at the outer circumferential side as a guide surface for guiding the ball 12a along the recess portion 23. Referring to Figs. 5(a) and 5(c), a circular guide groove 24 is formed at the terminal end of the recess portion 23 (the upper end side of the recess portion 23 shown in Fig. 5(a)). In the state where the cover 22 is attached to the case 8a, the guide groove 24 is directed opposite the protrusion 8b of the case 8a as shown in Fig. 4(a). The guide groove 24 extends to the portion near the pipe 10.

The movement path for the ball 12a defined by the case 8a and the cover 22 extends to the portion near the pipe 10 across the protrusion 8b. The ball 12a moving through the pipe 10 is guided on the guide surface 11a of the sealing plug 11 to enter into the movement path between the case 8a and the cover 22 from the notch portion 10c of the pipe 10, and is allowed to move along the movement path. In the aforementioned case, the ball 12a moves through the movement path while being guided by the guide groove 21, the inner circumferential wall surface 23a of the recess portion 23, the bottom surface 23b of the recess portion 23 (surface opposite the case 8a), the protrusion 8b, and the guide groove 24. As the first ball 12a abuts on the pipe 10 around the notch portion 10c, the subsequent balls 12a stop moving as described later. The ball abutment portion of the pipe 10 serves as a ball stopper portion 10d.

The operation of the above-structured pretensioner 8 of the example will be described.

The operation of the pretensioner 8 is basically the same as the generally employed pretensioner which uses the plural balls, that is, it is activated in an emergency of high deceleration applied to the vehicle involved in the collision for rotating the spool of the seatbelt retractor 3 in the seatbelt retracting direction.

Referring to Fig. 6(a), when the pretensioner 8 is in the non-active state, the first ball 12a is kept in abutment on the lever 17, and the subsequent adjacent balls 12a are kept in abutment with each other. In the aforementioned state, the gas generator 14 does not generate gas, and accordingly, the ball 12a applies substantially no pressure to the lever 17. The internal teeth 16a of the ring gear 16 are kept disengaged from the external teeth 20a of the pinion 20.

In the emergency as described above, the gas generator 14 is activated to generate gas to apply the large pressing force to the balls 12a. Then the ring gear 16 is moved rightward under the pressing force via the first ball 12a as shown in Fig. 6(a) so as to be turned counterclockwise. Referring to Fig. 6(b), the internal teeth 16a of the ring gear 16 are meshed with the external teeth 20a of the pinion 20. The pinion 20 starts turning in the same direction as the ring gear 16. The rotary shaft 19, that is, the spool starts rotating in the seatbelt retracting direction so as to start retracting the seatbelt 4 which restrains the occupant.

The first ball 12a is stored between the levers 17 and 18. When the second ball 12a abuts on the lever 18 adjacent to the lever 17 clockwise, the ring gear 16 and the pinion 20 are further turned counterclockwise under the pressing force of the lever 18 via the second ball 12a. The pressing force of the first ball 12a applied to the lever 17 has been substantially lost. The second and the third balls 12a are stored between the lever 18 and the next lever 18 adjacent thereto clockwise. When the fourth ball 12a next to the third ball 12a abuts on the next lever 18, the pressing force to the subsequent lever 18 via the fourth ball 12a further turns the ring gear 16 and the pinion 20 together counterclockwise. At this moment, the pressing force of the second and the third balls 12a applied to the lever 18 has been substantially lost.

The operation of the pretensioner 8 to the stage so far is substantially the same as the generally employed pretensioner. In the generally employed pretensioner, the ball having the pressing force to the lever substantially lost moves out from the notch portion of the pipe away from the lever so as to be stored in the ball storage chamber formed in the pretensioner. Meanwhile, the pretensioner 8 of the example has no ball storage chamber. The first to the third balls 12a each having the pressing force applied to the levers 17, 18 substantially lost are guided on the circular guide surface 11a of the sealing plug 11 to move away from the notch portion 10c of the pipe 10, and further move into the circular movement path formed between the case 8a and the cover 22.

The pressing force of the fourth and subsequent balls 12a to the adjacent levers 18 sequentially arranged clockwise rotates the ring gear 16 and the pinion 20 together counterclockwise continuously. Referring to Fig. 6(c), the ball 12a which moves to the movement path and has the pressing force substantially lost is moved along the movement path by the levers 17 and 18 of the ring gear 16 accompanied with the rotation thereof. Referring to Fig. 4(a), when the ball 12a reaches the protrusion 8b, it is pressed by the protrusion 8b against the cover 22. As the cover 22 has the guide groove 24 opposite the protrusion 8b, the ball 12a pressed by the protrusion 8b moves into the guide groove 24 while climbing over the protrusion 8b. The trapezoidal shape of the protrusion 8b allows the ball 12a to smoothly climb over the tilted surface of the side wall of the trapezoidal shape. Referring to Figs. 4(a) and 6(c), when the first ball 12a which has climbed over the protrusion 8b abuts on the ball stopper portion 10d of the pipe 10, the first ball 12a stops, and the rotation of the ring gear 6 stops as well. The pinion 20 also stops rotating to finish retraction of the seatbelt 4 by the spool. The retraction of the seatbelt 4 by the pretensioner 8 further enhances its force for restraining the occupant.

As the ring gear 6 stops rotating, the second and subsequent balls 12a stop moving. At this moment, the pressure of the gas generated in the pipe 10 is low. In the state where the balls 12a are stationary, most of those balls 12a are located in the movement path between the case 8a and the cover 22. That is, most of the balls 12a are located in the movement path at the end of operation of the pretensioner 8.

The other operation of the pretensioner 8 of the example is substantially the same as the generally employed pretensioner using the plural balls. The other operation of the seatbelt retractor 3 is substantially the same as the known ELR or ALR.

In the pretensioner 8 according to the example, the balls 12a apply the pressing force to the plural levers 17, 18 of the ring gear 16 sequentially. The resultant rotation of the ring gear 16 further rotates the spool to retract the seatbelt 4. Each ball 12a having the force for rotating the ring gear 16 lost is stored in the circular movement path between the case 8a of the pretensioner 8 and the cover 22. Unlike the generally employed pretensioner, the ball storage chamber is not required. This makes it possible to make the pretensioner 8 compact while efficiently utilizing the force of the plural balls for rotating the ring gear 16.

The first ball 12a is allowed to abut on the force transmission member stopper formed as the pipe 10 which constitutes the pretensioner 8 so as to effectively stop the plural balls 12a. In such a case, the force transmission member stopper is formed as a component of the pretensioner 8 to eliminate the need of the specific force transmission member stopper, resulting in cost reduction.

As the first ball 12a is stopped at the ball stopper portion 10d located around the force transmission portion of the notch portion 10c of the pipe 10, the ring gear 16 is allowed to make substantially one rotation. This makes it possible to set the large seatbelt retracting amount performed by the spool. Especially, the gear ratio between the internal teeth 16a of the ring gear 16 and the external teeth 20a of the pinion 20 is set to the appropriate value to effectively retract the seatbelt by substantially one rotation of the ring gear 16.

As the ring gear 16 is allowed to make substantially one rotation, the number of the balls 12a may be reduced. This makes it possible to effectively reduce the length of the pipe 10 as the relatively expensive material, thus effectively reducing the cost.

As the length of the pipe 10 may be reduced, the pipe 10 may be piped such that the leading end 10a of the pipe 10 is located at the lowermost position. In the piping, the pipe linearly extends from the leading end 10a upward, and is bent at a substantially right angle at the upper end of the base portion 9b of the frame 9 to linearly extend toward the vehicle exterior side in a substantially horizontal direction. It is further bent at a substantially right angle at the end of the base portion 9b along the longitudinal direction of the vehicle to extend toward the vehicle interior side slightly upward with respect to the horizontal direction. This makes it possible to direct the opening end of the pressure vessel 13 and the gas generator 14 slightly upward at the vehicle interior side. As a result, the work for inserting the balls 12a into the pipe 10 and the work for assembling the gas generator 14 with the pressure vessel 13 may be conducted further easily. The piping of the pipe 10 allows the seatbelt retractor 3 with the pretensioner 8 to be made further compact effectively as a whole.

The seatbelt device 1 with the seatbelt retractor 3 allows the seatbelt retractor 3 to be made compact. This makes it possible to reduce the space of vehicle body for accommodating the seatbelt retractor 3. The degree of freedom for installing the seatbelt retractor 3 in the vehicle body may be increased. The resultant flexibility for installing the seatbelt retractor 3 in the vehicle body may further improve the convenience of the seatbelt device 1.

Figs. 4(b) and 4(c) show modified examples of the ball stopper portions.

In the aforementioned example, the ball stopper portion 10d is disposed around the force transmission portion of the notch portion 10c of the pipe 10. Referring to Fig. 4(b), the ball stopper portion may be formed as the protrusion 8b of the case 8a which constitutes the pretensioner 8. Referring to Fig. 4(c), the ball stopper portion may be formed as a specific protrusion 8e formed on the case 8a.

The seatbelt retractor according to the present invention may be designed into various forms without being limited to the aforementioned example. In the example of the embodiment, the pinion 20 is formed separately from the rotary shaft 19 of the locking base, and attached thereto so as to be integrally rotatable. The pinion 20 may be integrally formed with the locking base using the single member. In such a case, the pinion 20 may be forged to have the reduced size. The gear ratio between the ring gear 16 and the pinion 20 may be set to be larger by the amount corresponding to the size reduction. The spool rotating amount by the pretensioner 8 may be increased even if the number of the balls 12a is reduced. This makes it possible to effectively increase the retracting amount of the seatbelt 4 while reducing the length of the pipe 10.

## Claims

1. A pretensioner (8) comprising
a pipe (10) with plural force transmission members (12) being movably disposed in the pipe (10) for transmitting a force for rotating a spool in a seatbelt retracting direction,
a gas generator (14) which generates gas in an emergency,
a ring gear (16) disposed at least rotatably, having plural internal teeth (16a) on an inner circumference and plural pressure receiving portions (17, 18) on an outer circumference, and
a pinion (20) disposed on a spool side member (19), having external teeth (20a) meshed with the internal teeth (16a) for rotating the spool,
wherein the force transmission members (12) press the pressure receiving portions (17) of the ring gear (16) to rotate the spool in the seatbelt retracting direction at a force transmission portion (10c) formed in the pipe (10) in the emergency,
**characterized by**
a movement path (8a, 22) formed to have a circular shape concentric with a rotating center of the pinion (20), through which the force transmission members (12) are movable, wherein the force transmission members (12) are allowed to be located in the movement path (8a, 22) at the end of an operation of the pretensioner (8), and
a force transmission member stopper (8e; 10d) on which a first one of the plural force transmission members (12) abuts to stop movement of the force transmission members (12).

2. The pretensioner according to Claim 1, wherein the force transmission member stopper (8e; 10d) is a component of the pretensioner (8).

3. The pretensioner according to Claim 2, wherein a portion of the pipe (10) around the force transmission portion (10c) is the component of the pretensioner (8).

4. The pretensioner according to Claim 2, further comprising a case (8a), wherein a protrusion (8e) of the case (8a) is the component of the pretensioner (8).

5. The pretensioner according to any one of Claims 1 to 4, wherein the spool side member (19) and the pinion (20) are integrally formed of a single member.

6. The pretensioner according to any one of Claims 1 to 5, wherein the pipe (10) is attached to a frame (9) of a seatbelt retractor (3), and piped such that a leading end (10a) of the pipe (10) is located at a lowermost position to extend from the leading end (10a) linearly upward, the pipe (10) is bent at a substantially right angle at an upper end of a base portion (9b) of the frame (9) to linearly extend in a substantially horizontal direction toward a vehicle exterior side, bent at a substantially right angle of an end of the base portion (9b) at the vehicle exterior side along a longitudinal direction of the vehicle, and bent at a substantially right angle of the base portion (9b) at an end of the base portion (9b) along the longitudinal direction of the vehicle to extend toward the vehicle interior side.

7. A seatbelt retractor provided with at least a seatbelt (4), a spool for retracting the seatbelt (4), and a pretensioner (8) for rotating the spool in a seatbelt retracting direction in an emergency, wherein the pretensioner (8) according to any one of Claims 1 to 6 is used.

8. A seatbelt device provided with at least a seatbelt retractor (3) for retracting a seatbelt (4), a tongue (6) slidably supported with the seatbelt (4), and a buckle (7) attached to a vehicle body, with which the tongue (6) is detachably engaged, wherein the seatbelt retractor (3) according to Claim 7 is used.

## Patentansprüche

1. Vorstraffer (8) umfassend
ein Rohr (10) mit mehreren Kraftübertragungsteilen (12), welche in dem Rohr (10) beweglich angeordnet sind, um eine Kraft zum Drehen einer Spule in eine Sitzgurt-Rückziehrichtung zu übertragen,
einen Gasgenerator (14), welcher in einem Notfall Gas erzeugt,
einen zumindest drehbar angeordneten Zahnkranz (16), welcher mehrere Innenzähne (16a) auf einem Innenumfang und mehrere Druckaufnahmeabschnitte (17, 18) auf einem Außenumfang aufweist, und
ein auf einem spulenseitigen Teil (19) angeordnetes Ritzel (20), welche mit den Innenzähnen (16a) in Eingriff stehende Außenzähne (20a) aufweist, um die Spule zu drehen,
wobei die Kraftübertragungsteile (12) im Notfall an einem in dem Rohr (10) ausgebildeten Kraftübertragungsabschnitt (10c) einen Druck auf die Druckaufnahmeabschnitte (17) des Zahnkranzes (16) ausüben, um die Spule in die Sitzgurt-Rückziehrichtung zu drehen,
**gekennzeichnet durch**
einen kreisförmig und konzentrisch zu einem Drehmittelpunkt des Ritzels (20) ausgebildeten Bewegungspfad (8a, 22), **durch** den die Kraftübertragungsteile (12) beweglich sind, wobei möglich ist, dass die Kraftübertragungsteile (12) am Ende einer Betätigung des Vorstraffers (8) in dem Bewegungspfad (8a, 22) angeordnet sind, und
einen Kraftübertragungsteil-Stopper (8e; 10d), an dem ein erstes Kraftübertragungsteil der mehreren Kraftübertragungsteile (12) anstößt, um die Bewegung der Kraftübertragungsteile (12) zu stoppen.

2. Vorstraffer nach Anspruch 1, wobei der Kraftübertragungsteil-Stopper (8e; 10d) eine Komponente des Vorstraffers (8) ist.

3. Vorstraffer nach Anspruch 1, wobei ein Abschnitt des Rohrs (10) um dem Kraftübertragungsabschnitt (10c) die Komponente des Vorstraffers (8) ist.

4. Vorstraffer nach Anspruch 2, weiter umfassend ein Gehäuse (8a), wobei ein Vorsprung (8e) des Gehäuses (8a) die Komponente des Vorstraffers (8) ist.

5. Vorstraffer nach einem der Ansprüche 1-4, wobei das spulenseitige Teil (19) und das Ritzel (20) gemeinsam in Form eines einzigen Teils ausgebildet sind.

6. Vorstraffer nach einem der Ansprüche 1-5, wobei das Rohr (10) an einem Rahmen (9) angebracht und derart ausgestaltet ist, dass ein vorderes Ende (10a) des Rohrs (10) an einer untersten Position angeordnet ist, so dass sich das Rohr von dem vorderen Ende (10a) linear nach oben erstreckt, wobei das Rohr (10) an einem oberen Ende eines Basisabschnitts (9b) des Rahmens (9) unter einem im Wesentlichen rechten Winkel gebogen ist, um sich linear in einer im Wesentlichen horizontalen Richtung zu einer Fahrzeugaußenseite hin zu erstrecken, wobei das Rohr (10) unter einem im Wesentlichen rechten Winkel eines Endes des Basisabschnitts (9b) an der Fahrzeugaußenseite entlang einer Längsrichtung des Fahrzeugs gebogen ist, und wobei das Rohr (10) unter einem im Wesentlichen rechten Winkel des Basisabschnitts (9b) an einem Ende des Basisabschnitts (9b) entlang der Längsrichtung des Fahrzeugs gebogen ist, um sich zu der Fahrzeuginnenseite hin zu erstrecken.

7. Sitzgurtaufroller umfassend zumindest einen Sitzgurt (4), eine Spule zum Zurückziehen des Sitzgurts (4) und einen Vorstraffer (8) zum Drehen der Spule in eine Sitzgurt-Rückziehrichtung in einem Notfall, wobei der Vorstraffer (8) nach einem der Ansprüche 1-6 verwendet wird.

8. Sitzgurtvorrichtung mit zumindest einem Sitzgurtaufroller (3) zum Zurückziehen eines Sitzgurts (4), einer gleitend an dem Sitzgurt (4) angebrachten Zunge (6) und einem an einem Fahrzeugkörper angebrachten Gurtschloss (7), mit dem die Zunge (6) lösbar in Eingriff gebracht ist, wobei der Sitzgurtaufroller (3) nach Anspruch 7 verwendet wird.

## Revendications

1. Prétendeur (8) comprenant :
un tuyau (10) avec plusieurs éléments de transmission de force (12) qui sont disposés de manière mobile dans le tuyau (10) pour transmettre une force afin de faire tourner un enrouleur dans la direction de rétraction de ceinture de sécurité,
un générateur de gaz (14) qui génère un gaz en cas d'urgence,
une couronne (16) disposée au moins de manière rotative, ayant plusieurs dents internes (16a) sur une circonférence interne et plusieurs parties de réception de pression (17, 18) sur une circonférence externe, et
un pignon (20) disposé sur un élément latéral d'enrouleur (19), ayant des dents externes (20a) engrenées avec les dents internes (16a) pour faire tourner l'enrouleur,
dans lequel les éléments de transmission de force (12) compriment les parties de réception de pression (17) de la couronne (16) pour faire tourner l'enrouleur dans la direction de rétraction de ceinture de sécurité au niveau d'une partie de transmission de force (10c) formée dans le tuyau (10) en cas d'urgence,
**caractérisé par** :
un chemin de déplacement (8a, 22) formé pour avoir une forme circulaire concentrique avec un centre de rotation du pignon (20), par le biais duquel les éléments de transmission de force (12) sont mobiles, dans lequel les éléments de transmission de force (12) sont autorisés à être positionnés dans le chemin de déplacement (8a, 22) à la fin d'une opération du prétendeur (8), et
une butée d'élément de transmission de force (8e ; 10d) sur lequel un premier de la pluralité d'éléments de transmission de force (12) vient en butée pour arrêter le déplacement des éléments de transmission de force (12).

2. Prétendeur selon la revendication 1, dans lequel la butée d'élément de transmission de force (8e ; 10d) est un composant du prétendeur (8).

3. Prétendeur selon la revendication 2, dans lequel une partie de tuyau (10) autour de la partie de transmission de force (10c) est le composant du prétendeur (8).

4. Prétendeur selon la revendication 2, comprenant en outre un boîtier (8a), dans lequel une saillie (8e) du boîtier (8a) est le composant du prétendeur (8).

5. Prétendeur selon l'une quelconque des revendications 1 à 4, dans lequel l'élément latéral d'enrouleur (19) et le pignon (20) sont formés de manière solidaire sous la forme d'un élément unique.

6. Prétendeur selon l'une quelconque des revendications 1 à 5, dans lequel le tuyau (10) est fixé à un châssis (9) d'un rétracteur de ceinture de sécurité (3), et acheminé de sorte qu'une extrémité d'attaque (10a) du tuyau (10) est positionnée dans la position la plus basse pour s'étendre à partir de l'extrémité d'attaque (10a) de manière linéaire vers le haut, le tuyau (10) est plié sensiblement en angle droit au niveau d'une extrémité supérieure d'une partie de base (9b) du châssis (9) pour s'étendre de manière linéaire dans une direction sensiblement horizontale vers un côté extérieur de véhicule, plié sensiblement en angle droit d'une extrémité de la partie de base (9b) au niveau du côté extérieur du véhicule le long d'une direction longitudinale du véhicule, et plié sensiblement en angle droit de la partie de base (9b) au niveau d'une extrémité de la partie de base (9b) le long de la direction longitudinale du véhicule pour s'étendre vers le côté intérieur du véhicule.

7. Rétracteur de ceinture de sécurité, doté d'au moins une ceinture de sécurité (4), d'un enrouleur pour rétracter la ceinture de sécurité (4) et d'un prétendeur (8) pour faire tourner l'enrouleur dans une direction de rétraction de ceinture de sécurité en cas d'urgence, dans lequel on utilise le prétendeur (8) selon l'une quelconque des revendications 1 à 6.

8. Dispositif de ceinture de sécurité doté d'au moins un rétracteur de ceinture de sécurité (3) pour rétracter une ceinture de sécurité (4), une languette (6) supportée de manière coulissante avec la ceinture de sécurité (4), et une boucle (7) fixée à une caisse de véhicule, avec lequel la languette (6) est mise en prise de manière détachable, dans lequel on utilise le rétracteur de ceinture de sécurité (3) selon la revendication 7.
